# EUROPEAN PATENT APPLICATION

(11) **EP 4 737 209 A1**
(43) Date of publication of application: **06.05.2026**
(21) Application number: 24830064.2
(22) Date of filing: 10.04.2024
(51) Int. Cl.: B60N 2/427

(54) **VEHICLE SEAT**

(30) Priority: 28.06.2023 CN 202310780491
(71) Applicant: Autoliv Development AB, 44783 Vargarda (SE)
(72) Inventor: YU, Yongzhi, Shanghai 201807 (CN)
(74) Representative: Müller Verweyen
(86) International application number: PCT/CN2024/086995
(87) International publication number: WO 2025/001414

(57) **Abstract**

The present invention relates to a vehicle seat, including a seat cushion portion, a backrest portion rotatable relative to the seat cushion portion, and a seat belt disposed on the vehicle seat. The seat belt includes a webbing and a tongue disposed on the webbing. A first end of the webbing is fastened to the seat cushion portion by a first retractor, a second end of the webbing is fastened to the backrest portion by a second retractor, and the tongue is limited to a predetermined position of the webbing. A limiting module includes a first limiting member and a second limiting member that interact with each other. The first limiting member is fastened to a side surface of the seat cushion portion and is provided with a first abutting portion. The second limiting member is fastened to a side surface of the backrest portion and is provided with a second abutting portion. When a predetermined condition is satisfied, the backrest portion rotates from a first angle to a second angle smaller than the first angle relative to the seat cushion portion in a first rotation direction, to drive the second limiting member to rotate relative to the first limiting member in the first rotation direction, such that the first abutting portion and the second abutting portion gradually approach and finally abut against each other, thereby limiting the backrest portion to the second angle.

## Description

### TECHNICAL FIELD

The present invention relates to an automotive component, and in particular, to a vehicle seat.

### BACKGROUND ART

In a vehicle, a vehicle seat is commonly equipped with a seat belt as a safety protection device. When a tongue on the seat belt is inserted into a buckle, i.e., after the seat belt is fastened, the seat belt cannot move from a shoulder of a passenger to legs of the passenger, thereby limiting the passenger to the vehicle seat. However, when a difference between a tensile force acting on a portion of the seat belt at the shoulder and a tensile force acting on a portion of the seat belt at the legs is less than a predetermined value, the seat belt can move from the shoulder of the passenger to the legs of the passenger. This leads to excessive looseness of the seat belt at the legs, and consequently, a relatively large gap is generated between the seat belt and the legs. Such a situation includes that a backrest portion of the seat transitions to an upright configuration in response to a vehicle collision. In this case, the legs of the passenger can move freely relative to the vehicle seat, thereby sliding forward and moving away from the vehicle seat.

Therefore, it is desirable to provide a vehicle seat with improved safety.

### SUMMARY OF THE INVENTION

An objective of the present invention is to provide a vehicle seat with improved safety, which is particularly suitable for a scenario in which a backrest portion of the seat transitions to an upright configuration in response to a collision.

The present invention provides a vehicle seat, comprising:
a seat cushion portion, a backrest portion rotatable relative to the seat cushion portion, and a seat belt disposed on the vehicle seat,
wherein,
the seat belt comprises a webbing and a tongue disposed on the webbing, a first end of the webbing being fastened to the seat cushion portion by a first retractor, a second end of the webbing being fastened to the backrest portion by a second retractor, and the tongue being limited to a predetermined position of the webbing;
a limiting module comprises:
   a first limiting member and a second limiting member that interact with each other,
   the first limiting member is fastened to a side surface of the seat portion and is provided with a first abutting portion, and
   the second limiting member is fastened to a side surface of the backrest portion and is provided with a second abutting portion; and

when a predetermined condition is satisfied, the backrest portion rotates from a first angle to a second angle smaller than the first angle relative to the seat cushion portion in a first rotation direction, to drive the first limiting member to rotate relative to the second limiting member in the first rotation direction, such that the first abutting portion and the second abutting portion gradually approach and finally abut against each other, thereby limiting an angle of the backrest portion relative to the seat cushion portion to the second angle.

According to an embodiment of the present invention, the first limiting member is provided with a first opposite abutting portion spaced apart from the first abutting portion, and the second limiting member is provided with a second opposite abutting portion spaced apart from the second abutting portion. When the predetermined condition is not satisfied, the first opposite abutting portion and the second opposite abutting portion abut against each other.

The limiting module is further provided with a force-applying member, and the force-applying member is configured to, when the predetermined condition is satisfied, apply a force to the first limiting member or the second limiting member to cause the first limiting member and the second limiting member to abut against each other at the first abutting portion and the second abutting portion.

According to an embodiment of the present invention, one of the first limiting member and the second limiting member is provided with a through-hole portion, at least one section of the through-hole portion in a circumferential direction being configured to be recessed relative to an adjacent section to form a groove; and the other of the first limiting member and the second limiting member is provided with a main body portion rotatably accommodated in the through-hole portion, at least one portion of the main body portion being configured to protrude relative to an adjacent portion to form a protrusion positioned in the groove. A pair of opposite side surfaces of the protrusion and the groove in the circumferential direction are respectively configured as the first abutting portion and the second abutting portion, and another pair of opposite side surfaces of the protrusion and the groove are respectively configured as the first opposite abutting portion and the second opposite abutting portion.

According to an embodiment of the present invention, a surface that is of the groove and that extends in the circumferential direction is configured as a tapered surface, and when the first abutting portion gradually approaches the second abutting portion, a gap between the protrusion and the tapered surface becomes smaller until the protrusion and the tapered surface come into contact with each other.

According to an embodiment of the present invention, both the first limiting member and the second limiting member are configured as disc-shaped members.

According to an embodiment of the present invention, the predetermined condition is defined as a vehicle collision occurring or an acceleration of a vehicle being greater than a predetermined value.

According to an embodiment of the present invention, the first limiting member and the second limiting member are fastened together by a fastener, and the fastener is removed when the predetermined condition is satisfied.

According to an embodiment of the present invention, the limiting module further comprises a removal device, and when the predetermined condition is satisfied, the removal device applies a force to the fastener to remove the fastener from the first limiting member and the second limiting member.

According to an embodiment of the present invention, the force-applying member is configured as an elastic member with one end fastened to the first limiting member or the second limiting member and the other end fastened to a seat cushion frame.

According to an embodiment of the present invention, the limiting module is provided with a pair of protrusions and a pair of grooves, the pair of protrusions being spaced apart by a predetermined angle, and the pair of grooves being spaced apart by the predetermined angle.

According to an embodiment of the present invention, the predetermined angle is set within the range of 100 degrees to 180 degrees.

According to an embodiment of the present invention, the predetermined angle is set to 180 degrees.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, wherein
FIG. 1 schematically shows a vehicle seat according to the present invention.
FIG. 2 to FIG. 4 schematically show a limiting module and components thereof in a vehicle seat according to the present invention.

### DETAILED DESCRIPTION OF PREFERRED EMBODIMENTS

Detailed description of a vehicle seat according to the present invention will be described below in connection with the accompanying drawings. The following detailed description and the accompanying drawings are used to exemplarily explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

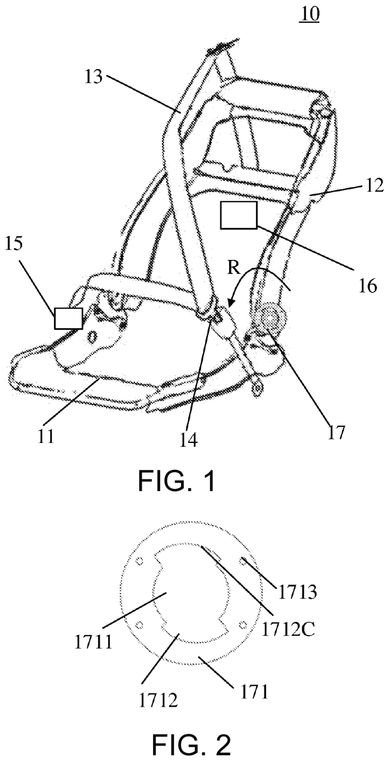

FIG. 1 schematically shows a vehicle seat according to the present invention. The vehicle seat according to the present invention will be described below with reference to FIG. 1.

As shown in FIG. 1, a vehicle seat 10 of the present invention includes a seat cushion portion 11 and a backrest portion 12. The backrest portion 12 is rotatable relative to the seat cushion portion 11, that is, a passenger can adjust the angle of the backrest portion 12 relative to the seat cushion portion 11 to improve comfort. In addition, the vehicle seat 10 of the present invention is further equipped with a seat belt, and the seat belt is disposed on the vehicle seat 10 to fasten the passenger to the vehicle seat 10. The seat belt includes a webbing 13 and a tongue 14 disposed on the webbing 13. As shown in a scenario in FIG. 1, as soon as the tongue 14 is inserted into a buckle, the seat belt can be used to protect the passenger. In the present invention, the webbing 13 is equipped with two retractors. Specifically, the first end (i.e., the lower end in FIG. 1) of the webbing 13 is fastened to the seat cushion portion 11 by a first retractor 15, and the second end (i.e., the upper end in FIG. 1) of the webbing 13 is fastened to the backrest portion 12 by a second retractor 16. In addition, the tongue 14 is limited to a predetermined position of the webbing 13. For example, the tongue 14 may be fastened in a loop portion of the webbing 13, and the loop portion is formed in the following manner: A looped section is formed by folding a section of the webbing 13 and then fastening the folded section by a stitch line in a width direction of the webbing. Since the tongue 14 is limited to the looped section, it can be understood that the tongue 14 is limited to the predetermined position of the webbing. For another example, the tongue 14 may be fastened to the predetermined position of the webbing 13 by a fastener, adhesion, or another means.

It can be understood that when a difference between a tensile force acting on the webbing of the seat belt at the shoulder and a tensile force acting on the webbing of the seat belt at the legs is less than a predetermined value, the webbing can move from the shoulder of a passenger to the legs of the passenger. This leads to excessive looseness of the seat belt at the legs, and consequently, a relatively large gap is generated between the seat belt and the legs. Such a situation includes that the backrest portion of the seat rotates to an upright configuration in response to a vehicle collision. In this case, the legs of the passenger can move freely relative to the vehicle seat, thereby sliding forward and moving away from the vehicle seat. Considering that during use of a zero-gravity safety seat, rotation of the backrest portion may be configured to cause rotation of the seat cushion portion, the passenger is more likely to slide away from the vehicle seat.

To solve the problem, in the present invention, the tongue is limited to the predetermined position of the webbing, thereby ensuring that a section that is of the webbing and that is at the shoulder of the passenger cannot pass through a through hole of the tongue to move to the legs. Similarly, it is ensured that a section that is of the webbing and that is at the legs of the passenger cannot pass through the through hole of the tongue to move to the shoulder. On this basis, the two retractors located at the two ends of the webbing can operate independently to respectively tighten the sections that are of the webbing and that are at the shoulder and the legs of the passenger, thereby firmly fastening the passenger to the vehicle seat.

The vehicle seat of the present invention further includes a limiting module 17, and the limiting module 17 is configured to limit a degree of recovery of the backrest portion 12 relative to the seat cushion portion 11 when a predetermined condition is satisfied. The limiting module of the present invention will be described in detail below.

FIG. 2 to FIG. 4 schematically show a limiting module and components thereof in a vehicle seat according to the present invention. The limiting module in the vehicle seat according to the present invention will be described in detail below with reference to FIG. 2 to FIG. 4.

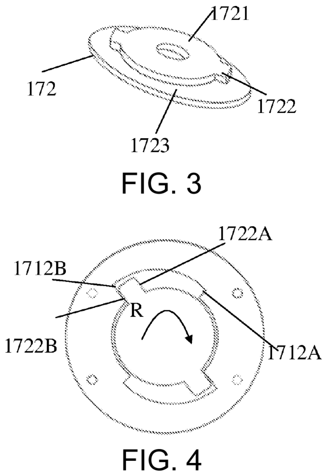

Referring to FIG. 2 to FIG. 4, a limiting module 17 of the present invention includes a first limiting member 171 and a second limiting member 172. The first limiting member 171 and the second limiting member 172 shown in FIG. 2 and FIG. 3 are disc-shaped components, but this is merely an example. The shapes of the first limiting member and the second limiting member of the limiting module of the present invention are not limited and may be determined based on an actual condition, such as a square shape or another irregular shape.

With reference to FIG. 1, the first limiting member 171 is fastened to a side surface of the seat cushion portion 11, and the second limiting member 172 is fastened to a side surface of the backrest portion 12. In this embodiment, the first limiting member 171 is provided with a through-hole portion 1711, and the through-hole portion 1711 is configured to run through the entire thickness of the first limiting member 171 and may be disposed concentric with the disc-shaped first limiting member 171. At least one section of the through-hole portion 1711 in a circumferential direction is configured to be recessed relative to an adjacent section to form a groove 1712. "Recessed" herein refers to being recessed outward in the radial direction, that is, the through-hole portion 1711 has a larger diameter at the groove 1712. As shown in FIG. 4, the groove 1712 has a first side surface 1712A and a second side surface 1712B that are opposite to each other in the circumferential direction. The second limiting member 172 includes a base portion 1723 and a main body portion 1721 protruding from a side surface of the base portion 1723. The main body portion 1721 protrudes from the side surface of the base portion 1723 in the thickness direction, that is, the second limiting member 172 has a larger thickness at the main body portion 1721. The main body portion 1721 is rotatably accommodated in the through-hole portion 1711 of the first limiting member 171. In addition, at least one portion of the main body portion 1721 is configured as a protrusion 1722 protruding relative to an adjacent portion. The protrusion 1722 protrudes outward relative to the adjacent portion thereof in the radial direction and is to be positioned within the groove 1712 of the first limiting member 171. As also shown in FIG. 4, the protrusion 1722 has a first side surface 1722A and a second side surface 1722B that are opposite to each other in the circumferential direction. Therefore, when the first limiting member 171 and the second limiting member 172 are assembled, the first side surface 1722A and the second side surface 1722B of the protrusion 1722 and the first side surface 1712A and the second side surface 1712B of the groove 1712 are respectively opposite to each other in the circumferential direction.

The first side surface 1722A of the protrusion 1722 and the first side surface 1712A of the groove 1712 respectively serve as the first abutting portion and the second abutting portion. As shown in FIG. 4, when the predetermined condition is satisfied, the backrest portion 12 rotates from a first angle to a second angle smaller than the first angle relative to the seat cushion portion 11 in a first rotation direction R, to drive the first limiting member 171 to rotate relative to the second limiting member 172 in the first rotation direction R, such that the first abutting portion and the second abutting portion gradually approach and finally abut against each other, thereby limiting an angle of the backrest portion 12 relative to the seat cushion portion 11 to the second angle.

The second side surface 1722B of the protrusion 1722 and the second side surface 1712B of the groove 1712 respectively serve as the first opposite abutting portion and the second opposite abutting portion. When the predetermined condition is not satisfied, the second side surface 1722B of the protrusion 1722 and the second side surface 1712B of the groove 1712 abut against each other to maintain the position of the first limiting member 171 relative to the second limiting member 172 at another position, and the another position makes the first abutting portion and the second abutting portion be at a certain distance from each other. It can be understood that the certain distance is related to the degree of recovery of the backrest portion 12 relative to the seat cushion portion 11. Specifically, when the certain distance is larger, the degree of recovery of the backrest portion 12 relative to the seat cushion portion 11 is larger, that is, the backrest portion 12 is closer to an upright position. When the certain distance is smaller, the degree of recovery of the backrest portion 12 relative to the seat cushion portion 11 is smaller, that is, the backrest portion 12 is farther from the upright position.

As an embodiment of the present invention, the limiting module 17 may be provided with a pair of protrusions 1722 and a pair of grooves 1712 to ensure that the first limiting member and the second limiting member are subjected to uniform force when abutting against each other. For example, the pair of protrusions 1722 are spaced apart by 180 degrees, and the pair of grooves 1712 are spaced apart by 180 degrees. Certainly, this is merely an example. The pair of protrusions and the pair of grooves may respectively be spaced apart by another angle, such as any angle within the range of 100 degrees to 180 degrees. The limiting module 17 may be provided with another number (e.g., more than two) of protrusions and grooves on the first limiting member and the second limiting member, respectively.

As an embodiment of the present invention, a surface that is of the groove 1712 and that extends in the circumferential direction is configured as a tapered surface 1712C, and when the first abutting portion gradually approaches the second abutting portion, as shown in FIG. 4, a gap between the protrusion 1722 and the tapered surface 1712C becomes smaller until the protrusion 1722 and the tapered surface 1712C come into contact with each other. It can be understood that disposing the tapered surface can reduce the rotation speed of the first limiting member through friction between the tapered surface and the protrusion, thereby reducing an impact generated when the first abutting portion and the second abutting portion abut against each other.

The first limiting member 171 and the second limiting member 172 are connected as follows.

As shown in FIG. 2, the first limiting member 171 is provided with fastening holes 1713, and four fastening holes 1713 are distributed along the periphery of the first limiting member 171. Correspondingly, the second limiting member 172 is also provided with four fastening holes. When the first opposite abutting portion and the second opposite abutting portion abut against each other, the respective fastening holes of the first limiting member 171 and the second limiting member 172 are in one-to-one alignment, and the first limiting member 171 and the second limiting member 172 are fastened together by a fastener (e.g., a pin) passing through each of the fastening holes. In addition, the following settings are made: The fastener is removed when the predetermined condition is satisfied. To that end, the limiting module 17 further includes a removal device, and the removal device may be, for example, a device capable of generating thrust (which may be thrust generated by igniting propellant) to push the fastener away from the fastening hole. When the predetermined condition is satisfied, the removal device applies a force to the fastener to remove the fastener from the first limiting member 171 and the second limiting member 172, thereby allowing the first limiting member 171 and the second limiting member 172 to rotate relative to each other.

In addition, the second limiting member may be directly fastened to a frame of the backrest portion of the seat, and the first limiting member may be connected to a frame of the seat cushion portion by a recliner, the recliner being configured to adjust the angle of the backrest portion relative to the seat cushion portion to provide comfort. That is, when the predetermined condition is not satisfied, the first limiting member and the second limiting member are fastened together and do not rotate relative to each other. Meanwhile, the adjustment of the angle of the backrest portion relative to the seat cushion portion is achieved by the recliner. As is well known, in a process of using the seat, after adjustment of the angle of the backrest portion of the seat is completed, the recliner of the seat is in a locked state, and even if a collision occurs, the backrest portion of the seat no longer rotates relative to the seat cushion portion. However, in the vehicle seat of the present invention, since the limiting module including the first limiting member and the second limiting member is disposed, when, for example, a collision occurs, the backrest portion of the seat is allowed to rotate by a controlled angle (rather than rotating forward without limitation) while tightening the seat belt. Therefore, the passenger does not slide forward from the seat to the extent of leaving the seat, thereby reducing an injury to the passenger.

As an embodiment of the present invention, the limiting module further includes a force-applying member, and the force-applying member is configured to, when the predetermined condition is satisfied, apply a force to the first limiting member or the second limiting member to cause the first limiting member and the second limiting member to abut against each other at the first abutting portion and the second abutting portion. For example, the force-applying member may be configured as a spring, one end of the spring is fastened to the first limiting member, and the other end is fastened to the frame of the backrest portion. The spring is configured to store a certain elastic force and cannot drive the backrest portion to rotate when the predetermined condition is not satisfied. It can be understood that after the fastener for locking the first limiting member and the second limiting member together is pushed away from the fastening hole, considering that, for example, in the initial stage of a collision, an inertial force of the passenger and a pulling force of the seat belt are too small, the elastic force stored in the spring can apply an initial driving torque to the first limiting member, thereby overcoming a friction force acting on the first limiting member and ensuring that the backrest portion rotates to the second angle as quickly as possible.

Certainly, the vehicle seat of the present invention is not limited to the above examples. For example, the specific structures of the first limiting member and the second limiting member described above may be interchanged. That is, the second limiting member may be provided with a through-hole portion, at least one section of the through-hole portion in a circumferential direction is configured to be recessed relative to an adjacent section to form a groove; and the first limiting member may be provided with a main body portion rotatably accommodated in the through-hole portion, at least one portion of the main body portion is configured to protrude relative to an adjacent portion to form a protrusion positioned within the groove. Similarly, a pair of opposite side surfaces of the protrusion and the groove in the circumferential direction are respectively configured as the first abutting portion and the second abutting portion, and another pair of opposite side surfaces of the protrusion and the groove in the circumferential direction are respectively configured as the first opposite abutting portion and the second opposite abutting portion.

In addition, the first opposite abutting portion and the second opposite abutting portion respectively disposed on the first limiting member and the second limiting member of the present invention are not limited to the structures described in the above examples. For example, the first abutting portion and the first opposite abutting portion of the first limiting member may be configured as two separate structures, such as two separate protrusions, and the second abutting portion and the second opposite abutting portion of the second limiting member may be configured as two separate structures. In addition, the force-applying member of the limiting module may alternatively be configured as another device capable of providing a driving force.

As an embodiment of the present invention, the predetermined condition is defined as a vehicle collision occurring or an acceleration of a vehicle being greater than a predetermined value.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A vehicle seat (10), comprising:
a seat cushion portion (11), a backrest portion (12) rotatable relative to the seat cushion portion (11), and a seat belt disposed on the vehicle seat (10),
**characterized in that**:
the seat belt comprises a webbing (13) and a tongue (14) disposed on the webbing (13), a first end of the webbing (13) being fastened to the seat cushion portion (11) by a first retractor (15), a second end of the webbing (13) being fastened to the backrest portion (12) by a second retractor (16), and the tongue (14) being limited to a predetermined position of the webbing (13);
a limiting module (17) comprises:
a first limiting member (171) and a second limiting member (172) that interact with each other,
the first limiting member (171) is fastened to a side surface of the seat cushion portion (11) and is provided with a first abutting portion, and
the second limiting member (172) is fastened to a side surface of the backrest portion (12) and is provided with a second abutting portion; and
when a predetermined condition is satisfied, the backrest portion (12) rotates from a first angle to a second angle smaller than the first angle relative to the seat cushion portion (11) in a first rotation direction (R), to drive the first limiting member (171) to rotate relative to the second limiting member (172) in the first rotation direction (R), such that the first abutting portion and the second abutting portion gradually approach and finally abut against each other, thereby limiting an angle of the backrest portion (12) relative to the seat cushion portion (11) to the second angle.

2. The vehicle seat (10) according to claim 1, wherein the first limiting member (171) is provided with a first opposite abutting portion spaced apart from the first abutting portion, the second limiting member (172) is provided with a second opposite abutting portion spaced apart from the second abutting portion, and when the predetermined condition is not satisfied, the first opposite abutting portion and the second opposite abutting portion abut against each other; and
the limiting module (17) is further provided with a force-applying member, and the force-applying member is configured to, when the predetermined condition is satisfied, apply a force to the first limiting member (171) or the second limiting member (172) to cause the first limiting member (171) and the second limiting member (172) to abut against each other at the first abutting portion and the second abutting portion.

3. The vehicle seat (10) according to claim 2, wherein one of the first limiting member (171) and the second limiting member (172) is provided with a through-hole portion (1711), at least one section of the through-hole portion (1711) in a circumferential direction being configured to be recessed relative to an adjacent section to form a groove (1712); the other of the first limiting member (171) and the second limiting member (172) is provided with a main body portion (1721) rotatably accommodated in the through-hole portion (1711), at least one portion of the main body portion (1721) being configured to protrude relative to an adjacent portion to form a protrusion (1722) positioned within the groove (1712); a pair of opposite side surfaces of the protrusion (1722) and the groove (1712) in the circumferential direction are respectively configured as the first abutting portion and the second abutting portion, and another pair of opposite side surfaces of the protrusion and the groove are respectively configured as the first opposite abutting portion and the second opposite abutting portion.

4. The vehicle seat (10) according to claim 3, wherein a surface that is of the groove (1712) and that extends in the circumferential direction is configured as a tapered surface (1712C), and when the first abutting portion gradually approaches the second abutting portion, a gap between the protrusion (1722) and the tapered surface (1712C) becomes smaller until the protrusion (1722) and the tapered surface (1712C) come into contact with each other.

5. The vehicle seat (10) according to claim 5, wherein both the first limiting member (171) and the second limiting member (172) are configured as disc-shaped members.

6. The vehicle seat (10) according to claim 1, wherein the predetermined condition is defined as a vehicle collision occurring or an acceleration of a vehicle being greater than a predetermined value.

7. The vehicle seat (10) according to claim 1, wherein the first limiting member (171) and the second limiting member (172) are fastened together by a fastener, and the fastener is removed when the predetermined condition is satisfied.

8. The vehicle seat (10) according to claim 7, wherein the limiting module (17) further comprises a removal device, and when the predetermined condition is satisfied, the removal device applies a force to the fastener to remove the fastener from the first limiting member (171) and the second limiting member (172).

9. The vehicle seat (10) according to claim 2, wherein the force-applying member is configured as an elastic member with one end fastened to the first limiting member (171) or the second limiting member (172) and the other end fastened to a seat cushion frame.

10. The vehicle seat (10) according to claim 3, wherein the limiting module (17) is provided with a pair of protrusions (1722) and a pair of grooves (1712), the pair of protrusions (1722) being spaced apart by a predetermined angle, and the pair of grooves (1712) being spaced apart by the predetermined angle.

11. The vehicle seat (10) according to claim 10, wherein the predetermined angle is set within the range of 100 degrees to 180 degrees.

12. The vehicle seat (10) according to claim 11, wherein the predetermined angle is set to 180 degrees.
